# EUROPÄISCHE PATENTSCHRIFT

(11) **EP 2 502 036 B1**
(45) Veröffentlichungstag und Bekanntmachung des Hinweises auf die Patenterteilung: **27.01.2016**
(21) Anmeldenummer: 10784694.1
(22) Anmeldetag: 15.11.2010
(51) Int. Cl.: G01J 1/04, B60R 1/00, B60S 1/08, G02B 3/08, G02B 27/01

(54) **OPTISCHE SENSORVORRICHTUNG ZUR DETEKTION VON UMGEBUNGSLICHT IN KRAFTFAHRZEUGEN**
OPTICAL SENSING DEVICE FOR DETECTING AMBIENT LIGHT IN MOTOR VEHICLES
DISPOSITIF CAPTEUR OPTIQUE POUR LA DÉTECTION DE LUMIÈRE AMBIANTE DANS DES VÉHICULES À MOTEUR

(30) Priorität: 18.11.2009 DE 102009053825
(43) Veröffentlichungstag der Anmeldung: 26.09.2012
(73) Patentinhaber: TRW Automotive Electronics & Components GmbH, 78315 Radolfzell (DE)
(72) Erfinder: BACKES, Ulrich, 78315 Radolfzell (DE)
(74) Vertreter: Prinz & Partner mbB
(86) Internationale Anmeldenummer: PCT/EP2010/006947
(87) Internationale Veröffentlichungsnummer: WO 2011/060911

(56) Entgegenhaltungen:
- EP-A1- 2 120 025
- DE-A1- 19 830 120
- DE-A1-102004 033 734
- DE-A1-102007 036 492
- DE-A1-102007 039 349
- DE-T2- 69 834 347
- JP-A- 4 147 019

## Beschreibung

Die Erfindung betrifft eine optische Sensorvorrichtung zur Detektion von Umgebungslicht.

Solche Sensorvorrichtungen werden hauptsächlich als Lichtsensoren zur Steuerung der Beleuchtung eines Fahrzeugs eingesetzt. Die Verwendung klassischer Linsen zur Beeinflussung des Strahlengangs, wie z. B. die gegen die Windschutzscheibe geneigten Linsen des in der EP 1 068 112 B1 gezeigten Regensensors, benötigen einen verhältnismäßig großen Bauraum.

Kleinere Bauformen sind, wie z. B. aus der WO 03/026937 A1 bekannt, durch Verwendung holografischer Strukturen möglich. Diese Sensoren basieren auf dem Prinzip der Lichtbeugung mithilfe von diffraktiven Elementen und haben daher den prinzipbedingten Nachteil einer wesentlich geringeren Nutzlichtausbeute und einer höheren Störlichtempfindlichkeit.

Die DE 196 08 648 C1 schlägt bei einer optischen Sensorvorrichtung vor, die Lichteintritts- bzw. -austrittsflächen der Lichtleitereinheit als Fresnellinsen auszubilden. Da jedoch die Flächen des Lichtleiters, in denen die Linsen ausgebildet sind, senkrecht zu der Fläche der Scheibe stehen, ist der erforderliche Bauraum dieser Vorrichtung sehr groß.

Weitere grundsätzliche Nachteile bekannter optischer Umgebungslichtsensorvorrichtungen sind im hohen Herstellungsaufwand und in einem zu engen Empfangsbereich zu sehen. Der Versuch, bei Sensorvorrichtungen mit Fresnellinsen eine Ausweitung dadurch zu produzieren, dass der Lichtempfänger weiter oder näher zum Brennpunkt der Fresnellinse platziert wird, scheitert an der damit einhergehenden Aufspaltung der Empfangscharakteristik in ein weiteres oder mehrere weitere Strahlenbündel weit außerhalb des vorgesehenen Empfangsbereichs. Gleiches gilt für den Versuch, die Empfängerfläche zu vergrößern.

Aus der DE 20 2006 005 665 U1 ist eine optische Regensensorvorrichtung mit einer quaderförmigen, parallel zur Windschutzscheibe eines Kraftfahrzeugs angeordneten Linsenplatte bekannt. Die dem Sender und dem Empfänger der Vorrichtung zugewandte Vorderseite der Linsenplatte weist Fresnelstufen auf, die zwei asphärische Fresnellinsen bilden, deren optische Achsen gegenüber der Windschutzscheibe jeweils um etwa 45° geneigt sind. Die erste Fresnellinse sorgt für eine im Wesentlichen parallele Ausrichtung der Strahlen des vom Sender ausgestrahlten Lichtbündels, sodass die Strahlen als parallel ausgerichtetes Lichtbündel in die Windschutzscheibe eingekoppelt werden. Die zweite Fresnellinse sorgt dafür, dass das aus der Windschutzscheibe ausgekoppelte, nach wie vor parallel ausgerichtete Lichtbündel auf den Empfänger fokussiert wird.

Optische Regensensorvorrichtungen, die die Reflexion von Licht, das von einem Sender auf eine Scheibe gerichtet wird, mit einem beabstandeten Empfänger auswerten, sind auch aus den folgenden Veröffentlichungen bekannt:

Die DE 698 34 347 T2 zeigt einen Feuchtigkeitssensor, bei dem ein von einem Emitter ausgestrahltes divergierendes Lichtbündel mittels einer Kollimatorlinse parallel gerichtet wird. Die Kollimatorlinse ist in einem Koppler auf der dem Sender zugewandten Seite als segmentierte Linse (Fresnellinse) ausgebildet. Eine vergleichbare Linse kann auch als Fokussierungslinse für das reflektierte parallele Lichtbündel verwendet werden, um das Lichtbündel auf den Detektor des Sensors zu richten.

Solche Fresnellinsen werden auch beim Regensensor der DE 10 2007 039 349 A1 verwendet, um die von einer Strahlungsquelle ausgesandte elektromagnetische Strahlung zu parallelisieren beziehungsweise die parallelisierte Strahlung nach Reflexion auf einen Empfänger zu fokussieren.

Die JP 4-147019 A zeigt eine optische Fokussiereinrichtung mit zwei voneinander beabstandeten, parallel zueinander angeordneten Platten. Die Lichteintrittsseite der ersten Platte ist eben, während die Austrittsseite als lichtablenkendes Doppelprisma ausgebildet ist, um Licht aus drei unterschiedlichen Richtungen parallel zu einer optischen Achse der Fokussiereinrichtung auszurichten. Die beiden Seiten der zweiten Platte sind als lineare Fresnellinsen ausgebildet, um die parallel ausgerichteten Lichtstrahlen auf ein lichtempfindliches Element zu lenken.

Aus der DE 198 30 120 A1 und der DE 10 2004 033 734 A1 sind optische Sensorvorrichtungen zur Erfassung der Benetzung bzw. zur Detektion von Feuchtigkeit auf einer Kraftfahrzeugscheibe bekannt, mit einem Empfänger für das von einem Sender ausgestrahlte und von der Scheibe reflektierte Licht. In einer mittels eines Koppelmediums an der Scheibe angebrachten Linsenplatte bzw. direkt in einem an der Scheibe anliegenden Koppler ist auf der dem Sender und Empfänger zugewandten Seite eine Prismenstruktur mit mehreren Einzelprismen gebildet. Im einen Fall dient die Prismenstruktur zum Parallelisieren eines divergierenden bzw. zur Fokussierung eines parallelen Lichtbündels, im anderen Fall soll durch die Prismenstruktur ein brechungsfreier Übergang der Strahlung in den Koppler hinein bzw. aus dem Koppler heraus erreicht werden, wofür die Flächen der Einzelprismen senkrecht zum ein- bzw. ausgekoppelten Lichtstrahlenbündel angeordnet sind.

Die DE 10 2007 036 492 A1 zeigt einen als gattungsgemäße optische Sensorvorrichtung ausgebildeten richtungsabhängigen Tageslichtsensor zur Detektion von Umgebungslicht mit einer Scheibe, einer Sensoreinheit, die wenigstens einen Lichtempfänger für Umgebungslicht und eine Linsenp-latte zur gerichteten Auskopplung eines Umgebungslichtbündels aus der Scheibe auf den Lichtempfänger aufweist, wobei die Linsenplatte mittels eines formschlüssig an einer der Scheibe zugewandten, im Wesentlichen planen und keine refraktiven oder diffraktiven Strukturen aufweisenden ersten Fläche der Linsenplatte anliegenden Kopplers an die Scheibe gekoppelt ist, indem das Material des Kopplers formschlüssig und ohne Einschluss von Luftblasen an der ersten Fläche anliegt, wobei die Linsenplatte eine dem Lichtempfänger zugewandte zweite Fläche hat, die im Wesentlichen parallel zur Scheibe orientiert ist und eine kreisförmige Fresnel-Prismenstruktur mit mehreren refraktiven Einzelprismen aufweist, und wobei die Prismenstruktur mit den Einzelprismen eine Sammellinse bildet, wobei die Einzelprismen geneigte Flächen aufweisen, die so ausgelegt sind, dass sie die Strahlen eines Umgebungslichtbündels mit parallelen Lichtstrahlen, das unter einem spitzen Winkel auf die Scheibe auftrifft, beim Eintritt in die Scheibe schräg nach unten gebrochen und ohne wesentliche Brechung durch den Koppler aus der Scheibe aus- und in die Linsenplatte eingekoppelt wird und bezogen auf deren zweite Fläche schräg auf die Prismenstruktur auftrifft, auf den Lichtempfänger fokussieren. Grundsätzlich weisen auf dieser Fresnel-Linsenplattentechnik basierende Tageslichtsensoren neben der gewünschten Hauptempfangscharakteristik jedoch eine gewisse Empfindlichkeit in weiteren, unerwünschten Empfangsrichtungen auf.

Aufgabe der Erfindung ist es, eine gewünschte Empfangscharakteristik zu erreichen, ohne dass die für die Fresnel-Prismatechnik typische Aufspaltung der Empfangscharakteristik in einen erwünschten und einen unerwünschten Bereich stattfindet.

Gelöst wird diese Aufgabe durch eine optische Sensorvorrichtung mit den Merkmalen des Anspruchs 1. Vorteilhafte und zweckmäßige Ausgestaltungen der erfindungsgemäßen optischen Sensorvorrichtung sind in den Unteransprüchen angegeben.

Da die erfindungsgemäße optische Sensorvorrichtung für ihre Funktion zur Erfassung von gerichtetem Umgebungslicht nur die eine Prismenstruktur benötigt, ist die Herstellung vereinfacht, und es ist eine äußerst kompakte Bauform möglich. Die Einzelprismen der Prismenstruktur sind so ausgelegt, dass sie Strahlen des Umgebungslichtbündels, die unter verschiedenen Winkeln in die Linsenplatte eintreten, auf den Lichtempfänger fokussieren. Das bedeutet anders ausgedrückt, dass die Einzelprismen verschiedenen vertikalen Lichteintrittswinkeln zugeordnet sind. Eine solche Gestaltung der Einzelprismen ermöglicht es, den Empfangsbereich der Sensoreinheit definiert auszuweiten, ohne dass eine Aufspaltung in mehrere Lichtbündel produziert wird.

Zum Schutz des Lichtempfängers vor unerwünschtem Fremdlichteinfluss ist gemäß der Erfindung auf der dem Empfänger zugewandten zweiten Fläche um die Prismenstruktur herum eine für Umgebungslicht undurchlässige Lichtsperre angeordnet. Die Lichtsperre kann in unterschiedlicher Weise realisiert sein, beispielsweise als dunkler Aufdruck oder als dunkle Kunststoffschicht. Die erfindungsgemäße Ausgestaltung, bei der der Lichtempfänger, bezogen auf eine den Lichtempfänger schneidende Normale zur zweiten Fläche, hinter der Lichtsperre positioniert ist, bietet einen optimalen Schutz für den Lichtempfänger.

Gemäß einer Weiterbildung der Erfindung kann die Linsenplatte auf der dem Lichtempfänger zugewandten zweiten Fläche auch zwei oder mehr Prismenstrukturen mit mehreren Einzelprismen aufweisen, welche so ausgelegt sind, dass sie die Strahlen wenigstens zweier Umgebungslichtbündel mit verschiedenen Hauptrichtungen auf den Lichtempfänger lenken.

Besonders platzsparend ist eine Ausführungsform, bei der zwei oder mehr Prismenstrukturen wenigstens teilweise ineinander integriert (d. h. einander überlagert) sind.

In einer vorteilhaften Ausführungsform eines Regen/Licht-Sensors ist neben der erfindungsgemäßen optischen Sensorvorrichtung für Umgebungslicht noch eine optische Regensensorvorrichtung zur Erfassung von Benetzungsereignissen auf der Scheibe vorgesehen, wobei sich die Sensorvorrichtungen eine gemeinsame Linsenplatte teilen, in der alle Prismenstrukturen ausgebildet sind.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 eine schematische Schnittansicht einer Sensoreinheit einer erfindungsgemäßen optischen Sensorvorrichtung;
- Figur 2 eine Draufsicht auf eine Prismenstruktur gemäß einer ersten Ausführungsform; und
- Figur 3 eine Draufsicht auf eine Prismenstruktur gemäß einer zweiten Ausführungsform.

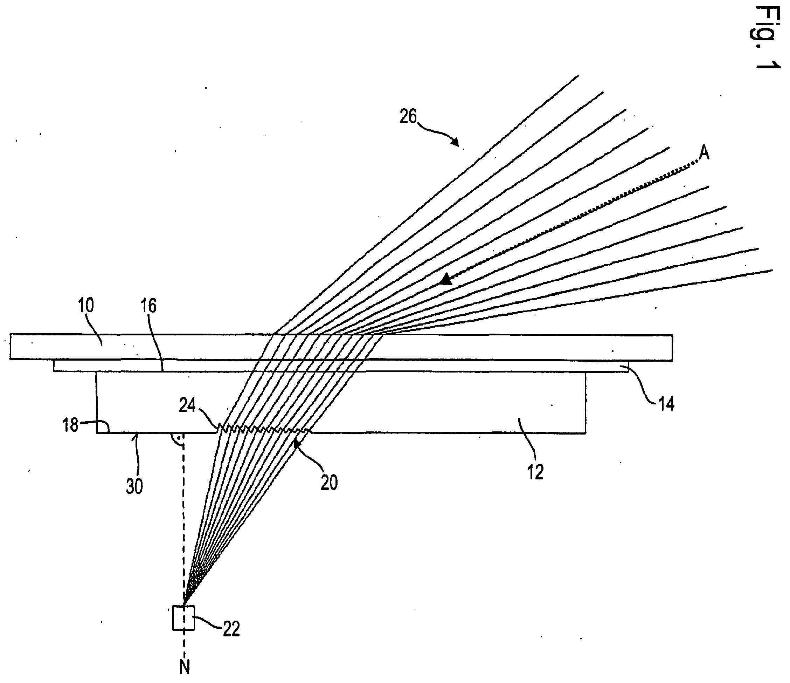

Die in Figur 1 dargestellte Sensoreinheit für einen Umgebungslichtsensor ist für den Einsatz in einem Kraftfahrzeug vorgesehen und an der Windschutzscheibe 10 des Fahrzeugs angebracht. Das optisch aktive Element der Sensoreinheit ist eine Linsenplatte 12. Die Linsenplatte 12 ist mittels eines Kopplers 14 mechanisch und optisch an die Windschutzscheibe 10 gekoppelt, indem das Material des Kopplers 14 formschlüssig und ohne Einschluss von Luftblasen oder dergleichen an einer der Windschutzscheibe 10 zugewandten ersten Fläche 16 der Linsenplatte 12 anliegt. Die erste Fläche 16 ist im Wesentlichen plan und weist keine refraktiven oder diffraktiven Strukturen auf.

Auf einer von der Windschutzscheibe 10 abgewandten zweiten Fläche 18 ist die Linsenplatte 12 mit einer kreisförmigen Fresnel-Prismenstruktur 20 versehen. Ansonsten ist die zweite Fläche 18 der Linsenplatte 12 parallel zur ersten Fläche 16 ausgerichtet und einem Lichtempfänger 22 der Sensoreinheit zugewandt. Die Prismenstruktur 20 weist eine Vielzahl von besonders gestalteten refraktiven Einzelprismen 24 auf, deren wesentliche Eigenschaften später noch erläutert werden.

Eine bezogen auf eine Hauptrichtung A unter einem spitzen Winkel auf die Windschutzscheibe 10 auftreffendes Umgebungslichtbündel 26 wird beim Eintritt in die Windschutzscheibe 10 schräg nach unten gebrochen. Das Lichtbündel 26 wird ohne wesentliche Brechung durch den Koppler 14 aus der Windschutzscheibe 10 aus- und in die Linsenplatte 12 eingekoppelt. Das die Linsenplatte 12 durchquerende Lichtbündel 26 trifft, bezogen auf die zweite Fläche 18 der Linsenplatte 12, schräg auf die Prismenstruktur 20. Die Prismenstruktur 20, genauer gesagt deren Einzelprismen 24 sind so gestaltet, dass sie auf das Lichtbündel 26 die Wirkung einer Sammellinse haben und die Strahlen des Lichtbündels 26 bündeln. Im Fokus der so gebildeten Sammellinse befindet sich der Lichtempfänger 22.

Eine weitere Besonderheit der Prismenstruktur 20 liegt darin, dass der Empfangsbereich der Sensoreinheit nicht auf ein eng begrenztes paralleles Lichtbündel, das unter einem bestimmten Winkel auf die Windschutzscheibe 10 trifft, beschränkt ist. Die Prismenstruktur 20 ist vielmehr so ausgelegt, dass der Empfangsbereich auf ein bezüglich der Hauptrichtung A konvergierendes Lichtbündel ausgeweitet ist. Wie aus Figur 1 ersichtlich, lenken die besonders gestalteten Einzelprismen 24 der Prismenstruktur 20 die Strahlen eines vorbestimmten, durch die Hauptrichtung A und einen Öffnungswinkel definierten Umgebungslichtbündels 26 auf den Lichtempfänger 22, d. h. die Einzelprismen 24 fokussieren Strahlen des Lichtbündels 26, die unter verschiedenen Winkeln in die Linsenplatte 12 eintreten, auf den Lichtempfänger 22.

Um die beiden vorgenannten Funktionen (Sammellinse und Empfangsbereichausweitung) zu erfüllen, weisen die Einzelprismen 24 der Prismenstruktur 20 geeignet geneigte Flächen zur Brechung bzw. Reflexion der Strahlen des Lichtbündels 26 auf.

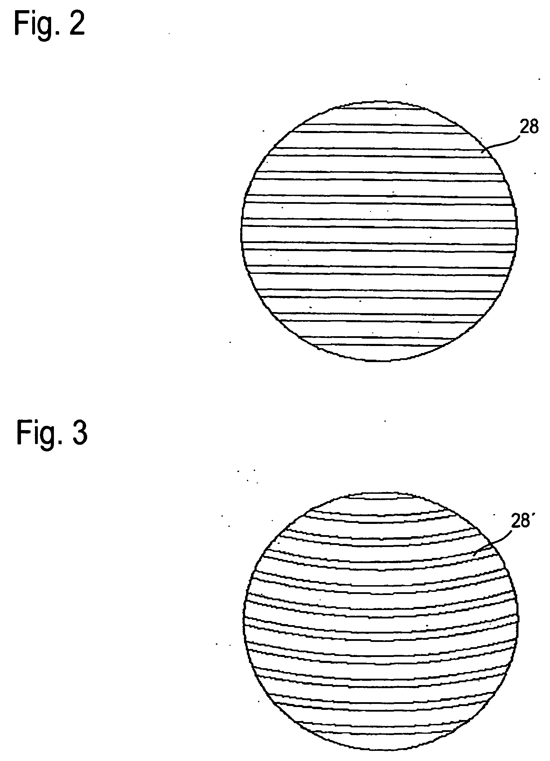

Figur 2 zeigt eine erste Ausführungsform der Prismenstruktur 20, bei der Reihen 28 von Einzelprismen 24 entlang von parallelen Geraden angeordnet sind. Eine solche Struktur kann als lineare Prismenstruktur bezeichnet werden.

Figur 3 zeigt eine zweite Ausführungsform der Prismenstruktur 20, bei der Reihen 28' von Einzelprismen 24 entlang von parallelen Kurven angeordnet sind, insbesondere entlang von konzentrischen Kreislinien, wobei die Radien den horizontalen Öffnungswinkel des detektierbaren Umgebungslichtbündels 26 bestimmen. Eine solche Struktur kann als rotatorische Prismenstruktur bezeichnet werden.

Die Linsenplatte 12 der optischen Sensorvorrichtung kann auf der zweiten Fläche 18 auch zwei Prismenstrukturen 20 aufweisen, z. B. eine lineare und eine rotatorische. Die Einzelprismen 24 der beiden Prismenstrukturen 20 sind dann so ausgelegt, dass sie die Strahlen zweier Umgebungslichtbündel 26 mit verschiedenen Hauptrichtungen A auf den Lichtempfänger 22 lenken. Die zwei Prismenstrukturen 20 können auch ineinander integriert (überlagert) sein.

Um die Prismenstruktur 20 herum ist auf der zweiten Fläche 18 der Linsenplatte 12 eine für Umgebungslicht undurchlässige Lichtsperre 30 angeordnet. In dem in Figur 1 dargestellten Ausführungsbeispiel ist die gesamte zweite Fläche 18 mit Ausnahme der Prismenstruktur 20 mit der Lichtsperre 30 belegt.

Die Lichtsperre 30 schützt den Lichtempfänger 22 vor unerwünschtem Fremdlichteinfall. Hierzu ist der Lichtempfänger 22, bezogen auf eine den Lichtempfänger 22 schneidende Normale N zur zweiten Fläche 18, vorteilhaft hinter der Lichtsperre 30 positioniert.

Die Herstellung der Linsenplatte 12 mit der Prismenstruktur 20 kann in herkömmlicher Spritzgusstechnik erfolgen. Alternativ kommt eine Prägetechnik zum Einsatz. Die Lichtsperre 30 kann insbesondere ein Schwarzdruck oder ein dunkler Kunststoff sein, der nachträglich auf die Linsenplatte 12 aufgebracht (z. B. durch Überspritzen) oder in einem Mehrkomponenten- bzw. Mehrfarbspritzgussverfahren zusammen mit der Linsenplatte 12 hergestellt wird.

In der Praxis werden kombinierte Regen/Licht-Sensoren benötigt. Ein Regensensor enthält eine Anzahl von Sensoreinheiten, die ebenso wie die Sensoreinheit des beschriebenen Umgebungslichtsensors aktive optische Strukturen erfordern. Der besondere Aufbau des Umgebungslichtsensors erlaubt es, dass sich die Sensoreinheiten des Umgebungslichtsensors und des Regensensors eine gemeinsame Linsenplatte 12 teilen können, sodass sich ein minimaler Bauraum ergibt. Bei Bedarf können außerdem weitere Sensoreinheiten vorgesehen sein, die Licht aus verschiedenen Richtungen empfangen und/oder unterschiedliche Empfangscharakteristiken aufweisen.

### Bezugszeichenliste

- 10: Windschutzscheibe
- 12: Linsenplatte
- 14: Koppler
- 16: erste Fläche der Linsenplatte
- 18: zweite Fläche der Linsenplatte
- 20: Prismenstruktur
- 22: Lichtempfänger
- 24: Einzelprismen
- 26: Lichtbündel
- 28, 28': Reihen von Einzelprismen
- 30: Lichtsperre

## Patentansprüche

1. Optische Sensorvorrichtung zur Detektion von Umgebungslicht, mit
einer Scheibe (10),
einer Sensoreinheit, die wenigstens einen Lichtempfänger (22) für Umgebungslicht und eine Linsenplatte (12) zur gerichteten Auskopplung eines Umgebungslichtbündels (26) aus der Scheibe (10) auf den Lichtempfänger (22) aufweist,
wobei die Linsenplatte (12) mittels eines formschlüssig an einer der Scheibe (10) zugewandten ersten Fläche (16) der Linsenplatte (12) anliegenden Kopplers (14) an die Scheibe (10) gekoppelt ist, indem das Material des Kopplers (14) formschlüssig und ohne Einschluss von Luftblasen an der ersten Fläche (16) anliegt,
wobei die Linsenplatte (12) eine dem Lichtempfänger (22) zugewandte zweite Fläche (18) hat, die im Wesentlichen parallel zur Scheibe (10) orientiert ist und eine kreisförmige Fresnel-Prismenstruktur (20) mit mehreren refraktiven Einzelprismen (24) aufweist, und
wobei die Prismenstruktur (20) mit den Einzelprismen (24) eine Sammellinse bildet, wobei die Einzelprismen (24) geneigte Flächen aufweisen, die so ausgelegt sind, dass sie die Strahlen eines bezüglich einer Hauptrichtung (A) konvergierenden Umgebungslichtbündels (26), das unter einem spitzen Winkel auf die Scheibe (10) auftrifft, beim Eintritt in die Scheibe (10) schräg nach unten gebrochen und ohne wesentliche Brechung durch den Koppler (14) aus der Scheibe (10) aus- und in die Linsenplatte (12) eingekoppelt wird und bezogen auf deren zweite Fläche (18) schräg auf die Prismenstruktur (20) auftrifft, auf den Lichtempfänger (22) fokussieren,
**dadurch gekennzeichnet, dass** auf der zweiten Fläche (18) um die Prismenstruktur (20) herum eine für Umgebungslicht undurchlässige Lichtsperre (30) angeordnet ist, wobei der Lichtempfänger (22), bezogen auf eine den Lichtempfänger (22) schneidende Normale (N) zur zweiten Fläche (18), hinter der Lichtsperre (30) positioniert ist.

2. Optische Sensorvorrichtung nach Anspruch 1, **dadurch gekennzeichnet, dass** die Linsenplatte (12) auf der zweiten Fläche (18) zwei Prismenstrukturen (20) mit mehreren Einzelprismen (24) aufweist, welche so ausgelegt sind, dass sie die Strahlen zweier Umgebungslichtbündel (26) mit verschiedenen Hauptrichtungen (A) auf den Lichtempfänger (22) lenken.

3. Optische Sensorvorrichtung nach Anspruch 2, **dadurch gekennzeichnet, dass** die Einzelprismen (24) von zwei Prismenstrukturen (20) jeweils in Reihen (28, 28') angeordnet sind, die einander wenigstens teilweise überlagert sind.

4. Optische Sensorvorrichtung nach einem der vorhergehenden Ansprüche, **dadurch gekennzeichnet, dass** sie eine Anzahl von Sensoreinheiten aufweist, die eine gemeinsame Linsenplatte (12) haben.

5. Regen/Licht-Sensor, **gekennzeichnet durch** eine optische Sensorvorrichtung nach einem der vorhergehenden Ansprüche, kombiniert mit einer optischen Regensensorvorrichtung, wobei die Sensorvorrichtungen eine gemeinsame Linsenplatte (12) haben.

## Claims

1. An optical sensor device for the detection of ambient light, comprising
a pane (10),
a sensor unit which includes at least one light receiver (22) for ambient light and a lens plate (12) for directionally coupling an ambient light beam (26) out of the pane (10) onto the light receiver (22),
the lens plate (12) being coupled to the pane (10) by means of a coupler (14) which lies in a form-fitting manner against a first surface (16), facing the pane (10), of the lens plate (12) by the material of the coupler (14) lying against the first surface (16) in a form-fitting manner and without an inclusion of air bubbles,
the lens plate (12) having a second surface (18) facing the light receiver (22) and oriented substantially parallel to the pane (10) and including a circular Fresnel prism structure (20) having a plurality of refractive single prisms (24), and
the prism structure (20) with the single prisms (24) forming a convergent lens, the single prisms (24) including inclined surfaces which are designed to focus the rays of an ambient light beam (26) onto the light receiver (22), the ambient light beam (26) converging in relation to a principal direction (A) and impinging on the pane (10) at an acute angle, being refracted obliquely downward when it enters the pane (10) and being coupled out of the pane (10) and into the lens plate (12) by the coupler (14) without a considerable refraction and impinging on the prism structure (20) at an angle, as related to the second surface (18) of the lens plate (12),
**characterized in that** a light lock (30) that is opaque to ambient light is arranged on the second surface (18) around the prism structure (20), the light receiver (22), in relation to a normal (N) to the second surface (18), intersecting the light receiver (22), being positioned behind the light lock (30).

2. The optical sensor device according to claim 1, **characterized in that** the lens plate (12) includes two prism structures (20) with a plurality of single prisms (24) on the second surface (18), the single prisms (24) being designed to direct the rays of two ambient light beams (26) having different principal directions (A) onto the light receiver (22).

3. The optical sensor device according to claim 2, **characterized in that** the single prisms (24) of two prism structures (20) are each arranged in rows (28, 28') which are at least partly superposed on one another.

4. The optical sensor device according to any of the preceding claims, **characterized in that** it includes a number of sensor units which have a shared lens plate (12).

5. A rain/light sensor, **characterized by** an optical sensor device according to any of the preceding claims, combined with an optical rain sensor device, the sensor devices having a shared lens plate (12).

## Revendications

1. Dispositif de capteur optique pour la détection de lumière ambiante, comportant :
une vitre (10),
une unité de capteur qui présente au moins un récepteur de lumière (22) pour de la lumière ambiante et une plaque lentille (12) pour découpler un faisceau de lumière ambiante (26) de manière dirigée hors de la vitre (10) et sur le récepteur de lumière (22),
la plaque lentille (12) étant couplée à la vitre (10) au moyen d'un coupleur (14) reposant par coopération de formes sur une première surface (16) de la plaque lentille (12) qui est tournée vers la vitre (10) en ce que le matériau du coupleur (14) repose sur la première surface (16) par coopération de formes et sans inclusion de bulles d'air,
la plaque lentille (12) présentant une deuxième surface (18) qui est tournée vers le récepteur de lumière (22), qui est orientée sensiblement parallèlement à la vitre (10) et qui comporte une structure de prismes de Fresnel (20) circulaire présentant plusieurs prismes individuels (24) réfractifs, et
la structure de prismes (20) avec les prismes individuels (24) formant une lentille convergente, les prismes individuels (24) présentant des surfaces inclinées réalisées de manière à focaliser les rayons d'un faisceau de lumière ambiante (26) convergent par rapport à un sens principal (A) sur le récepteur de lumière (22), le faisceau de lumière ambiante étant incident sur la vitre (10) selon un angle aigu, étant réfracté en oblique vers le bas lors de l'entrée dans la vitre (10), étant couplé sans réfraction sensible par le coupleur (14) hors de la vitre (10) et dans la plaque lentille (12) et étant incident sur la structure de prismes (20) en oblique par rapport à la deuxième surface (18) de la plaque lentille,
**caractérisé en ce qu'**une barrière de lumière (30) opaque pour de la lumière ambiante est agencée sur la deuxième surface (18) autour de la structure de prismes (20), le récepteur de lumière (22) étant positionné derrière la barrière de lumière (30) par rapport à une normale (N) à la deuxième surface (18) coupant le récepteur de lumière (22).

2. Dispositif de capteur optique selon la revendication 1, **caractérisé en ce que** la plaque lentille (12) présente sur la deuxième surface (18) deux structures de prismes (20) comportant plusieurs prismes individuels (24), lesquels sont réalisés de manière à diriger les rayons de deux faisceaux de lumière ambiante (26) qui présentent différents sens principaux (A) sur le récepteur de lumière (22).

3. Dispositif de capteur optique selon la revendication 2, **caractérisé en ce que** les prismes individuels (24) de deux structures de prismes (20) sont respectivement agencés en rangées (28, 28') qui se superposent au moins en partie.

4. Dispositif de capteur optique selon l'une des revendications précédentes, **caractérisé en ce qu'**il comporte un nombre d'unités de capteur qui présentent une plaque lentille (12) commune.

5. Capteur de pluie/de lumière, **caractérisé par** un dispositif de capteur optique selon l'une des revendications précédentes combiné avec un dispositif de capteur de pluie optique, les dispositifs de capteur présentant une plaque lentille (12) commune.
